# EUROPEAN PATENT SPECIFICATION

(11) **EP 2 318 573 B1**
(45) Date of publication and mention of the grant of the patent: **26.04.2017**
(21) Application number: 09769654.6
(22) Date of filing: 26.06.2009
(51) Int. Cl.: C25D 13/04, C25D 13/14, C25D 13/22, F28F 19/04, F28D 1/053, C09D 5/08, F16L 58/10

(54) **ANTI-CORROSION TREATMENT METHOD**
ANTIKORROSIONSBEHANDLUNGSMETHODE
PROCEDE DE PROTECTION ANTICORROSION

(30) Priority: 26.06.2008 IT MI20081168
(43) Date of publication of application: 11.05.2011
(73) Proprietor: FONDITAL S.p.A., Vobarno (BS) (IT)
(72) Inventor: FRANZONI, Francesco, 25070 Casto (IT)
(74) Representative: Cernuzzi, Daniele
(86) International application number: PCT/IB2009/006072
(87) International publication number: WO 2009/156843

(56) References cited:
- EP-A2- 0 854 347
- EP-A2- 1 935 535
- DE-A1- 19 801 656
- FR-A- 1 475 430
- GB-A- 1 114 121
- US-A- 4 503 099
- US-A- 4 947 548

## Description

### TECHNICAL FIELD

The present invention relates to a total anti-corrosion protection heating radiator element, and to a method for the anti-corrosion treatment of heating radiator elements.

### BACKGROUND ART

An anti-corrosion treatment method for heating radiators according to the preamble of claim 1 is known from document FR 1 475 430.

As known, a die-cast aluminium radiator normally consists of a battery of elements coupled to one another to form an appropriately sized radiator; each element has an aluminium body having an inner chamber in which heating water circulates.

The element normally has a tubular body extending longitudinally and transversal coupling sleeves: an end part of the tubular body usually extends along an axis beyond a pair of sleeves and forms a bottom of the element, closed by a cap.

The known radiator elements are normally painted on the outside but not on the inside; the inner chamber is thus delimited by aluminium walls, the surfaces of which are, in use, directly in contact with water and are not protected against corrosion.

Indeed, the elements are usually painted by means of electrophoresis, mainly anaphoresis, painting processes. These methods, as commonly implemented, do not allow the inner chamber of a radiator element to be completely painted, since the chamber has a substantially tubular, very elongated, relatively narrow shape.

On the other hand, electrophoresis painting is not normally applicable to elements of this type, because the penetration of the paint may not be complete, both due to the Faraday cage effect, which occurs in this type of structure, and because of air pockets in the end portions of the elements immersed in the painting baths.

In particular, when the element is immersed in a painting bath in the usual position reversed with respect to the position of use (i.e. with the bottom up), an air pocket is indeed formed in the bottom, which prevents the paint from accessing and settling in this zone. On the other hand, the same problem (formation of an air pocket) also occurs when the element is immersed in any other treatment tank, e.g. for washing and for all pre-treatments which are normally carried out before painting.

Therefore, aluminium radiator elements internally protected against corrosion are not currently available.

So-called "bi-metal" radiators are instead known, having a central tubular core made of iron or brass (internally defining the water circulation chamber) and coated with aluminium and onto which other external aluminium parts are fitted.

This type of solution results in a thermal efficiency reduction (especially in the case of iron, which is a poor heat conductor), a significant weight increase of each element of the radiator and, furthermore, increases complexity and costs of the manufacturing process and transport operations.

### DISCLOSURE OF INVENTION

The present invention thus relates to a method for the anti-corrosion treatment of heating radiator elements as defined in the appended claim 1.

### BRIEF DESCRIPTION OF THE DRAWINGS

The invention is described in the following non-limitative embodiments, with reference to the accompanying figures, in which:
- figure 1 is a diagrammatic, longitudinal section view of a radiator element;
- figure 2 is a longitudinal section view according to a plane orthogonal to the plane of figure 1 of a detail of the element in figure 1, with a further enlarged detail;
- figure 3 diagrammatically shows a first embodiment of the method of anti-corrosion treatment in accordance with the invention, with a detail on enlarged scale;
- figure 4 diagrammatically shows a second embodiment of the method of anti-corrosion treatment in accordance with the invention.

### BEST MODE FOR CARRYING OUT THE INVENTION

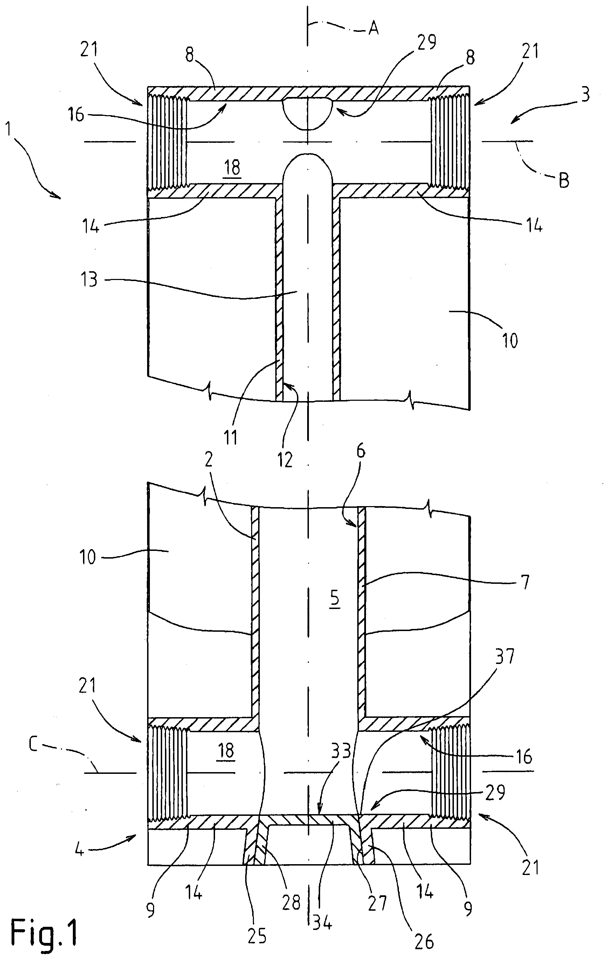

With reference to figure 1, a heating radiator element 1 has a body 2 made of aluminium, e.g. die-cast aluminium, substantially extending along an axis A between two axial ends 3, 4 which, with reference to the normal, substantially vertical position of use of element 1, are the upper and lower ends, respectively; body 2 is provided with an inner chamber 5 for passing the water, delimited by inner surfaces 6 of the aluminium body 2. Term "chamber" includes every zone inside the element 1 which, in use, is wet by the water circulating in the element 1, and "inner surfaces" are all the surfaces inside the body 2 which delimit the chamber 5 (thus being in contact with water in use).

In particular, the body 2 of the element 1 comprises at least one main tubular body 7, which extends longitudinally along axis A; two pairs of transversal coupling sleeves 8, 9; and a plurality of radiating fins and/or plates 10 variously connected to each other and/or to the tubular body 7.

The tubular body 7 may be variously shaped and have a differently shaped cross section, also variable along axis A. The tubular body 7 has a side wall 11 arranged about axis A and provided with an inner surface 12 which delimits a main portion 13 of chamber 5.

Two pairs of sleeves 8, 9 are arranged at the axially opposite ends 3, 4 of the tubular body 7, respectively; the sleeves 8, 9 of each pair extend from opposite sides of the tubular body 7, substantially orthogonal to axis A, and extend along respective axes B, C substantially parallel to each other and orthogonal to axis A.

Each of the sleeves 8, 9 has a side wall 14 provided with an inner surface 16, which delimits a channel 18. Each sleeve 8, 9 is provided with an end opening 21, provided with an inner threading for connecting several elements 1 to form a radiator, by inserting specific joints (known and not shown).

The pair of sleeves 8, which in use and thus with the element 1 being vertical is in the upper position, is connected to the tubular body 7 so as to form a T-shaped connection; the pair of sleeves 9, which in use and thus with the element 1 being vertical is in the lower position, intersects the tubular body 7 at a predetermined distance from the end 4 of the tubular body 7, and is thus cross-connected with the tubular body 7.

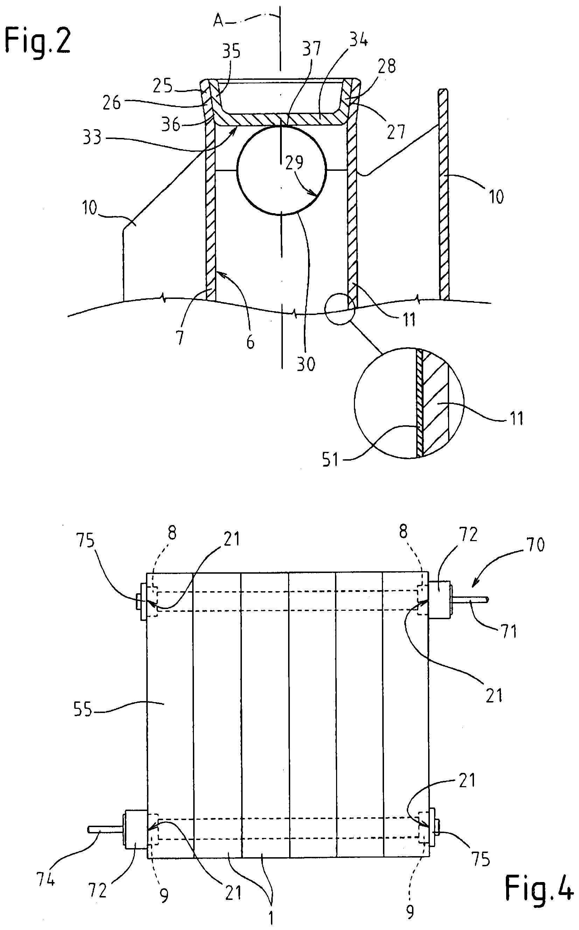

With reference also to figure 2, an end part 25 of the tubular body 7, which extends along axis A beyond the pair of lower sleeves 9 and is delimited by an end wall portion 26, forms a bottom of the element 1, having a bottom opening 27 closed by a cap 28.

Each sleeve 8, 9 is internally connected to the tubular body 7 by means of a hole 29 formed through the side wall 11 of the tubular body 7 and delimited by a peripheral edge 30; the sleeves 8, 9 of each pair have facing holes 29 aligned along the axes B, C.

Chamber 5 comprises the main portion 13, essentially defined within the tubular body 7, and the channels 18 defined within the sleeves 8, 9; the channels 18 are connected to the main portion 13 by means of the holes 29.

The cap 28 has a closing surface 33 arranged inside the end part or bottom 25.

The inner surfaces 6 of the body 2 include the surface 12 which delimits the main portion 13 of chamber 5, the surfaces 16 which delimit the channels 18, and the closing surface 33 of the cap 28.

The cap 28 may have different shapes: in the non-limitative example shown in figures 1 and 2, the cap has a bottom wall 34 and an annular collar 35, which extends from a peripheral edge 36 of the bottom wall 34. The closing surface 33 is defined by a surface of the bottom wall 34 facing the side opposite to collar 35.

The cap 28 is preferably completely inserted into the bottom 25, i.e. into the end part of the tubular body 7. The closing surface 33 of the cap 28 is arranged inside the bottom 25 and in close proximity of the edges 30 of the holes 29 of the lower sleeves 9, and specifically in close proximity of the portions 37 of the edges 30 facing the bottom opening 27 and closer to the bottom opening 27.

In particular, the closing surface 33 is substantially tangent to the holes 29 formed in the side wall 11 of the tubular body 7 and which connect sleeves 9 to chamber 5.

The cap 28 is integrally fixed and fluid-tightly coupled to the bottom 25 and specifically to the end wall portion 26.

The cap 28 may be coupled to the bottom 25 in various manners, e.g. by welding, plastic deformation, pressure seals, gluing, etc. The cap 28 is preferably fixed to the bottom 25 (i.e. the end wall portion 26) by means of a radially external weld, i.e. by means of a weld provided on the radially external surface of the cap 28 (specifically of the collar 35); thereby, welding residues or flashes are avoided within the chamber, which could in use detach and cause working problems of element 1.

Furthermore, the end part 25 of the tubular body 7, which forms the bottom, preferably has a flaring diverging outwards (i.e. towards the bottom opening 27) and the cap 28 (in particular, its collar 35) has a corresponding flared shape.

It is understood that the cap 28 may be differently shaped; for example, according to a possible variant, the cap is substantially flat, e.g. consisting of the bottom wall 34 only, and is accommodated within the bottom 25 with the peripheral edge 36 inserted into a seat obtained in the end wall portion 26, which could also be substantially parallel to axis A, and not flared.

Chamber 5 is entirely coated with a protective coating 51 made of an anti-corrosion polymeric coating material applied on all the inner surfaces 6 of the aluminium body 2 and which protects in use the surfaces 6 against the contact with water.

In particular, the coating 51 is made of an electrophoresis paint, e.g. epoxy or acrylic resins, or of a fluorinated polymeric coating (e.g. Teflon-based) or similar products.

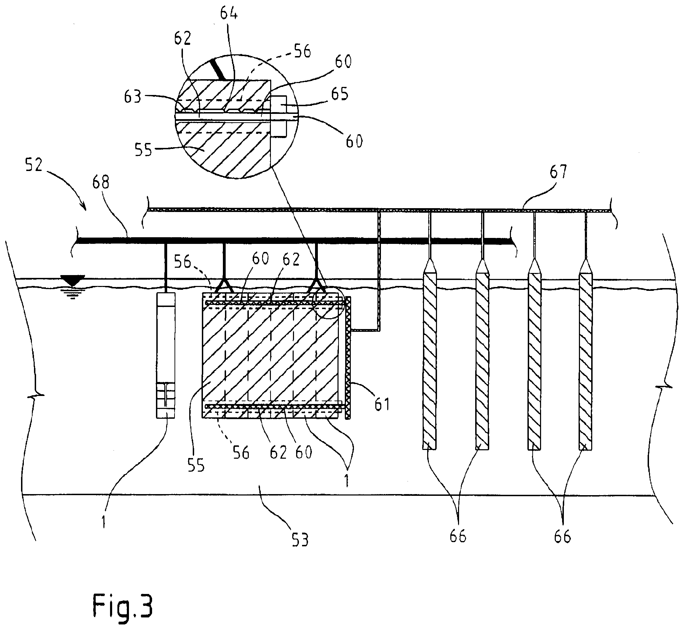

Figure 3 diagrammatically shows a first embodiment of the method of anti-corrosion treatment of element 1, wherein the coating 51 is deposited on the surfaces 6 by means of an electrochemical deposition process, and specifically by means of an electrophoresis process (cataphoresis or anaphoresis painting).

As known, electrophoresis processes exploit the electrokinetic phenomenon consisting in the movement of electrically charged particles dispersed in a fluid due to an electrical field applied by a pair of electrodes to the fluid itself. The particles move towards the cathode (cataphoresis) if they are positively charged and towards the anode (anaphoresis) if they are negatively charged.

Elements 1, individually or in a battery, are hung from an actuating system 52, which conveys them towards a treatment tank 53, which is contextually used for painting the outer parts of elements 1.

In order to obtain a good painting of the outer surfaces of elements 1, elements 1 are vertically hung in a reversed position with respect to the position of normal use, and thus with the sleeves 9 and the end part 25 forming the bottom facing upwards, and the sleeves 8 facing downwards.

The example in figure 3 shows a battery 55 of elements 1 coupled to one another by means of respective sleeves 8, 9 (and thus forming a radiator of desired length); the respective openings 21 of end elements 1 of battery 55 are open. The sleeves 8, 9 of the elements are obviously aligned and define respective continuous conduits 56 formed by the channels 18 of the single sleeves 8, 9.

The tank 53 contains an electrodeposition bath, for example consisting of water and a liquid treatment composition containing an electrodeposition material which forms the anti-corrosion polymeric coating material; in particular, the bath contains a cataphoretic or anaphoretic paint (i.e. consisting of positively or negatively charged particles) comprising polymeric resins (for example, epoxy, acrylic, etc.), pigments, fillers, additives and solvents.

Removable electrodes 60 are inserted into the conduits 56. The electrodes 60 are preferably fork-shaped, and have a support 61 from which two parallel rectilinear conducting bars 62 protrude, which bars may be inserted into the sleeves 8, 9; each bar 62 is externally coated with an insulating sheath 63, having openings 64 spaced along the bar 62. The electrodes 60 are further provided with insulating abutment portions 65, for example defined by discs mounted onto the bars 62 close to the support 61 and abuttingly cooperating, in use, with respective frontal edges of the sleeves 8, 9 through which the electrodes are inserted.

The electrodes 60, as further electrodes 66 immersed in the tank 53, are electrically connected by means of a connection 67 to a pole of a rectifier (known and not shown), while the elements 1 are connected to the opposite pole, by means of a connection 68 associated with the actuating system 52.

Obviously, it is possible to operate both with cataphoresis paints and anaphoresis paints, by connecting the electrodes 60, 66 and the elements 1 to the appropriate poles: the elements 1 will be connected to the pole having opposite sign with respect to the charges of the paint particles, so as to attract these particles.

When the battery 55 is immersed in the electrodeposition bath and an electrical field is applied (by applying a predetermined voltage) in the tank 53, the paint particles migrate towards the elements 1, where the paint sets and deposits on the surfaces 6 thus forming the coating 51.

After deposition of the coating 51, the elements 1 are extracted from the tank 53 and (with the electrodes 60 being removed) sent to a so-called step of baking, e.g. carried out in a furnace, for drying and possibly polymerizing the polymeric coating material.

It is understood that the described treatment may be also individually applied to each element 1, before the elements are joined to form a battery 55. In this case, the use of electrodes 60 inserted into the sleeves 8, 9 could be unnecessary, but it would be needed to appropriately modify the operating parameters of the electrodeposition process.

In general, the time of contact between the elements 1 and the treatment composition (i.e. permanence time of the elements 1 in the bath, determined by the rate with which the actuating system 52 conveys the elements through the tank 53) and/or other operative parameters which affect the deposition of the coating 51, such as in particular the voltage applied to the bath to promote the electrochemical deposition of the coating material, are selected so as to obtain a complete coating of all the surfaces 6.

By way of example, a complete coating of the surfaces 6 is obtained:
a) without using the electrodes 60, by treating each element 1 individually with a contact time lower than about 150 seconds, and in particular in the range from about 90 to about 150 seconds, and preferably about 120 seconds, and an applied voltage lower than about 360 volts, and in particular in the range from about 250 to about 350 volts;
b) without using the electrodes 60, by treating batteries 55 of few elements 1, in particular up to four elements 1, with a contact time higher than about 150 seconds, and preferably about 180 seconds, and a voltage in the range from about 250 to about 400 volts, and preferably higher than about 350 volts;
c) with the electrodes 60, by treating batteries 55 consisting of several elements 1, in particular of more than four elements 1, with a contact time lower than about 150 seconds, and in particular in the range from about 90 to about 150 seconds, and preferably about 120 seconds, and an applied voltage lower than about 360 volts, and in particular in the range from about 250 to about 350 volts.

According to the embodiment in figure 4, the coating 51 is applied by introducing a liquid treatment composition containing the polymeric coating material, which has features of adhesion to the aluminium surfaces and protection against corrosion, into a single element 1 or, as shown in figure 4, in a battery 55 of coupled elements 1. For example, fluorinated polymeric compounds (such as Teflon) or similar products are used.

The battery 55 is connected to a system 70 for the forced circulation of the treatment composition; two of the four total openings 21 of the end elements 1 of battery 55 are used for the connection to the system 70, being in particular connected, by means of respective separable joints 72, to a feeding tube 71 and to an output tube 74, respectively; and the other two are closed by removable service caps 75.

When the treatment composition circulates through the elements 1, the polymeric coating material contained in the treatment composition deposits on the inner surfaces 6 and adheres thereto. Once elements 1 have been drained from the treatment composition which has not adhered to the surfaces 6, the battery 55 is sent to a furnace for a step of drying and/or (if needed) a possible polymerization.

The battery 55 is then taken to a step of painting to externally paint the elements 1, by means of traditional electrophoresis or powder painting. It is understood that the painting of the outer parts could be carried out before the above-described treatment of the inner surfaces 6 (which could thus be applied to previously externally painted elements 1).

The advantages of the invention are apparent from the above description.

The radiator element of the invention is completely protected against corrosion, also on all the inner surfaces thereof, and may thus work over long periods of time even with particularly aggressive waters.

The protective anti-corrosion coating is applied either during the step of painting the exterior of the element, thus exploiting the same operation and the same electrochemical deposition process, or during a separate step which is however simple and fast to be carried out.

In both cases, the treatment method is simple, cost-effective and fully efficient. Since the coating material is deposited by means of an electrochemical deposition process (in particular by means of an electrophoresis process), the presence of electrodes positioned inside the sleeves allows to completely cover the coating surface at each point of the inner surfaces of the element.

The particular conformation of the closing cap of the bottom allows to avoid the formation of air pockets precisely inside the bottom, when the element is immersed in a treatment composition in the usual position reversed with respect to the position of use (i.e. with the bottom up) or in all cases during a step of filling the inner chamber with a treatment composition. Thereby, all the inner surfaces of the element may be entirely treated, in particular washed, pre-treated and/or painted.

Moreover, it is understood that further changes and variations may be made to the disclosure illustrated herein, without departing from the scope of the invention as defined in the appended claims.

## Claims

1. An anti-corrosion treatment method for heating radiator elements having a body (2) made of aluminium and provided with an inner chamber (5) for water circulation, delimited by inner surfaces (6) of the aluminium body (2); the method comprising a step of applying a protective coating (51) made of an anti-corrosion coating material to the inner surfaces (6) of the aluminium body (2) so as to completely coat the chamber (5), for protecting in use the inner surfaces (6) of the aluminium body (2) against the contact with water; wherein the protective coating (51) is made of a coating material which has features of adhesion to the aluminium surfaces and protection against corrosion; **characterized in that** the anti-corrosion coating material is an anti-corrosion polymeric coating material, the coating material being an electrophoresis paint or a fluorinated polymeric material which is deposited by means of an electrochemical deposition process; the inner surfaces (6) being taken in contact with a treatment composition containing the coating material by means of immersion of the elements (1), individually or in a battery, in an electrodeposition bath containing the treatment composition, or by circulating the treatment composition within the elements (1), individually or joined in a battery, by means of a forced circulation system (70); and wherein the method comprises a step of introducing removable electrodes (60) into single elements (1) or more elements (1) joined in batteries (55).

2. A method according to claim 1, comprising a step of filling the chamber (5) with a treatment composition containing the polymeric coating material, and a step of draining the chamber once the coating material has adhered to the inner surfaces (6) of the chamber (5).

3. A method according to claim 1 or 2, wherein the coating material is deposited by means of an electrophoresis process.

4. A method according to claim 1, wherein each element (1) is individually treated, with a contact time lower than about 150 seconds, and in particular in the range from about 90 to about 150 seconds, and preferably about 120 seconds, and an applied voltage lower than about 360 volts, and in particular in the range from about 250 to about 350 volts.

5. A method according to claim 1, wherein the batteries (55) consisting of two to four elements (1) are treated with a contact time longer than 150 seconds and preferably about 180 seconds, and a voltage in the range from about 250 to about 400 volts.

6. A method according to claim 1, wherein the batteries (55) consisting of more than one elements (1), in particular of more than four elements (1), are treated with a contact time lower than about 150 seconds, and in particular in the range from about 90 to about 150 seconds, and preferably about 120 seconds, and an applied voltage lower than about 360 volts, and in particular in the range from about 250 to about 350 volts.

7. A method according to claim 1, wherein the electrodes (60) are fork-shaped, and have a pair of rectilinear parallel conducting bars (62), insertable into respective conduits formed inside an element (1) or inside a battery (55) of elements (1) coupled to one another.

8. A method according to one of the preceding claims, comprising a step of baking in a furnace after the step of applying the protective coating (51).

9. A method according to one of the preceding claims, wherein the body (2) of the element (1) comprises a tubular body (7) having an end part (25) which extends beyond a pair of transversal coupling sleeves (9), internally connected to the tubular body (7) by means of respective holes (29) delimited by peripheral edges (30), and which is provided with a bottom opening (27) closed by a cap (28); and the method comprises a step of closing the bottom opening (27) with a cap (28) which has a closing surface (33) arranged within the end part (25), in close proximity of said holes (29), so as to avoid the formation of air pockets during the step of filling the chamber (5) with the treatment composition.

## Patentansprüche

1. Antikorrosionsbehandlungsverfahren zum Erhitzen von Heizelementen, die einen Körper (2) aus Aluminium aufweisen und mit einer Innenkammer (5) für Wasserzirkulation versehen sind, wobei die Kammer durch Innenflächen (6) des Aluminiumkörpers (2) begrenzt ist; wobei das Verfahren einen Schritt zum Aufbringen einer Schutzbeschichtung (51) aus Antikorrosionsbeschichtungsmaterial auf die Innenflächen (6) des Aluminiumkörpers (2) umfasst, sodass die Kammer (5) zum Schützen der Innenflächen (6) des Aluminiumkörpers (2) gegen den Kontakt mit Wasser während der Verwendung komplett beschichtet wird; wobei die Schutzbeschichtung (51) aus einem Beschichtungsmaterial besteht, das Merkmale der Adhäsion an die Aluminiumflächen und Schutz gegen Korrosion aufweist; **dadurch gekennzeichnet, dass** das Antikorrosionsbeschichtungsmaterial ein Antikorrosions-polymerbeschichtungsmaterial ist, wobei das Beschichtungsmaterial eine elektrophoretische Farbe oder ein Fluorpolymermaterial ist, das mittels eines elektrochemischen Abscheidungsverfahrens aufgebracht wird; wobei die Innenflächen (6) mit einer Behandlungszusammensetzung, die das Beschichtungsmaterial enthält, in Kontakt gebracht werden, mittels Eintauchen der Elemente (1), einzeln oder als Batterie, in ein elektrochemisches Abscheidungsbad, das die Behandlungszusammensetzung enthält, oder durch das Zirkulieren der Behandlungszusammensetzung innerhalb der Elemente (1), einzeln oder als Batterie zusammengefügt, mittels eines Druckumlaufs (70); und wobei das Verfahren einen Schritt zum Einführen von entfernbaren Elektroden (60) in einzelne Elemente (1) oder mehrere Elemente (1), die als Batterie (55) zusammengefügt sind, umfasst.

2. Verfahren nach Anspruch 1, umfassend einen Schritt zum Befüllen der Kammer (5) mit einer Behandlungszusammensetzung, die das Polymerbeschichtungsmaterial enthält, und einen Schritt zum Entleeren der Kammer, sobald das Beschichtungsmaterial an den Innenflächen (6) der Kammer (5) haftet.

3. Verfahren nach den Ansprüchen 1 oder 2, wobei das Beschichtungsmaterial mittels eines elektrophoretischen Vorgangs abgeschieden wird.

4. Verfahren nach Anspruch 1, wobei jedes Element (1) einzeln behandelt wird, mit einer Kontaktzeit von weniger als 150 Sekunden, und insbesondere im Bereich von etwa 90 bis etwa 150 Sekunden, und vorzugsweise etwa 120 Sekunden, und einer angelegten Spannung von weniger als 360 Volt, und insbesondere im Bereich von etwa 250 bis etwa 350 Volt.

5. Verfahren nach Anspruch 1, wobei die Batterien (55), die aus zwei bis vier Elementen (1) bestehen, mit einer Kontaktzeit von mehr als 150 Sekunden und vorzugsweise etwa 180 Sekunden, und einer Spannung im Bereich von etwa 250 bis etwa 400 Volt behandelt werden.

6. Verfahren nach Anspruch 1, wobei die Batterien (55), die aus mehr als einem Element (1), insbesondere aus mehr als vier Elementen (1) bestehen, mit einer Kontaktzeit von weniger als 150 Sekunden, und insbesondere im Bereich von etwa 90 bis etwa 150 Sekunden, und vorzugsweise etwa 120 Sekunden, und einer angelegten Spannung von weniger als 360 Volt, und insbesondere im Bereich von etwa 250 bis etwa 350 Volt behandelt werden.

7. Verfahren nach Anspruch 1, wobei die Elektroden (60) gabelförmig sind und ein Paar von geradlinig parallel leitenden Stäben (62) aufweisen, die in jeweilige Kanäle einsetzbar sind, die in einem Element (1) oder einer Batterie (55) aus Elementen (1), die aneinandergekoppelt sind, gebildet sind.

8. Verfahren nach einem der vorhergehenden Ansprüche, umfassend einen Schritt zum Einbrennen in einem Ofen nach dem Schritt zum Aufbringen der Schutzbeschichtung (51).

9. Verfahren nach einem der vorhergehenden Ansprüche, wobei der Körper (2) des Elements (1) einen röhrenförmigen Körper (7) umfasst, der ein Endteil (25) aufweist, das sich über ein Paar quer verlaufender Kupplungshülsen (9) hinaus erstreckt, die innen mit dem röhrenförmigen Körper (7) mittels jeweiliger Löcher (29) verbunden sind, die durch Umfangsränder (30) begrenzt sind, und der mit einer unteren Öffnung (27) versehen ist, die mit einem Deckel (28) geschlossen ist; und wobei das Verfahren einen Schritt zum Schließen der unteren Öffnung (27) mit einem Deckel (28) umfasst, der eine Verschlussfläche (33) aufweist, die innerhalb des Endteils (25) angebracht ist, in unmittelbarer Nähe zu den Löchern (29), sodass die Bildung von Lufteinschlüssen während des Schrittes zum Befüllen der Kammer (5) mit der Behandlungszusammensetzung vermieden wird.

## Revendications

1. Procédé de traitement anticorrosion pour des éléments de radiateur chauffants ayant un corps (2) réalisé en aluminium et pourvu d'une chambre intérieure (5) pour la circulation d'eau, délimitée par des surfaces intérieures (6) du corps en aluminium (2) ; le procédé comprenant une étape d'application d'un revêtement protecteur (51) réalisé en un matériau de revêtement anticorrosion aux surfaces intérieures (6) du corps en aluminium (2) de façon à revêtir totalement la chambre (5), pour protéger en utilisation les surfaces intérieures (6) du corps en aluminium (2) contre le contact avec l'eau ; dans lequel le revêtement protecteur (51) est réalisé en un matériau de revêtement qui a des particularités d'adhérence aux surfaces en aluminium et de protection contre la corrosion ; **caractérisé en ce que** le matériau de revêtement anticorrosion est un matériau de revêtement polymérique anticorrosion, le matériau de revêtement étant une peinture électrophorèse ou un matériau polymérique fluoré qui est déposé au moyen d'un processus de dépôt électrochimique ; les surfaces intérieures (6) étant prises en contact avec une composition de traitement contenant le matériau de revêtement par voie d'immersion des éléments (1), individuellement ou dans une batterie, dans un bain d'électrodéposition contenant la composition de traitement, ou par circulation de la composition de traitement au sein des éléments (1), individuellement ou assemblés dans une batterie, au moyen d'un système de circulation forcée (70) ; et dans lequel le procédé comprend une étape d'introduction d'électrodes amovibles (60) dans des éléments uniques (1) ou plusieurs éléments (1) assemblés dans des batteries (55).

2. Procédé selon la revendication 1, comprenant une étape de remplissage de la chambre (5) avec une composition de traitement contenant le matériau de revêtement polymérique, et une étape de vidange de la chambre une fois que le matériau de revêtement a adhéré aux surfaces intérieures (6) de la chambre (5).

3. Procédé selon la revendication 1 ou 2, dans lequel le matériau de revêtement est déposé au moyen d'un processus d'électrophorèse.

4. Procédé selon la revendication 1, dans lequel chaque élément (1) est traité individuellement, avec un temps de contact inférieur à environ 150 secondes, et en particulier dans une plage d'environ 90 à environ 150 secondes, et de préférence d'environ 120 secondes, et une tension appliquée inférieure à environ 360 volts, et en particulier dans une plage d'environ 250 à environ 350 volts.

5. Procédé selon la revendication 1, dans lequel les batteries (55) constituées de deux à quatre éléments (1) sont traitées avec un temps de contact supérieur à 150 secondes et de préférence d'environ 180 secondes, et une tension dans une plage d'environ 250 à environ 400 volts.

6. Procédé selon la revendication 1, dans lequel les batteries (55) constituées de plus d'un élément (1), en particulier de plus de quatre éléments (1), sont traitées avec un temps de contact inférieur à environ 150 secondes, et en particulier dans une plage d'environ 90 à environ 150 secondes, et de préférence d'environ 120 secondes, et une tension appliquée inférieure à environ 360 volts, et en particulier dans une plage d'environ 250 à environ 350 volts.

7. Procédé selon la revendication 1, dans lequel les électrodes (60) sont en forme de fourche, et ont une paire de barres conductrices parallèles rectilignes (62), pouvant être insérées dans des conduits respectifs formés à l'intérieur d'un élément (1) ou à l'intérieur d'une batterie (55) d'éléments (1) couplés les uns aux autres.

8. Procédé selon l'une des revendications précédentes, comprenant une étape de cuisson dans un four après l'étape d'application du revêtement protecteur (51).

9. Procédé selon l'une des revendications précédentes, dans lequel le corps (2) de l'élément (1) comprend un corps tubulaire (7) ayant une partie d'extrémité (25) qui s'étend au-delà d'une paire de manchons d'accouplement transversaux (9), raccordés à l'intérieur au corps tubulaire (7) au moyen d'orifices (29) respectifs délimités par des bords périphériques (30), et qui est pourvu d'une ouverture de fond (27) fermée par un capuchon (28) ; et le procédé comprend une étape de fermeture de l'ouverture de fond (27) avec un capuchon (28) qui a une surface de fermeture (33) agencée au sein de la partie d'extrémité (25), à proximité étroite desdits orifices (29), de façon à éviter la formation de poches d'air pendant l'étape de remplissage de la chambre (5) avec la composition de traitement.
